# EUROPÄISCHE PATENTSCHRIFT

(11) **EP 2 025 906 B1**
(45) Veröffentlichungstag und Bekanntmachung des Hinweises auf die Patenterteilung: **02.05.2012**
(21) Anmeldenummer: 08019571.2
(22) Anmeldetag: 31.01.2008
(51) Int. Cl.: F02G 5/00, F16D 57/00, B60H 1/32, F16D 57/04, F01K 23/06

(54) **Antriebsstrang, insbesondere Fahrzeugantriebsstrang**
Power transmission, in particular vehicle power transmission
Conducteur de commande, en particulier conducteur de commande de véhicule

(30) Priorität: 05.02.2007 DE 102007006420
(43) Veröffentlichungstag der Anmeldung: 18.02.2009
(62) Teilanmeldung aus: 08707464.7
(73) Patentinhaber: Voith Patent GmbH, 89522 Heidenheim (DE)
(72) Erfinder: Bartosch, Stephan, 89192 Rammingen (DE); Berger, Jürgen, 89547 Gerstetten (DE)
(74) Vertreter: Schmidt, Sven Hendrik

(56) Entgegenhaltungen:
- DE-A1- 2 203 319
- DE-C1- 19 716 299
- JP-A- 59 221 409
- JP-A- 60 139 538

## Beschreibung

Die vorliegende Erfindung betrifft im Allgemeinen einen Antriebsstrang und besonders einen Fahrzeugantriebsstrang, in der Regel Kraftfahrzeugantriebsstrang.

Es ist bereits bekannt, in Antriebssträngen sowohl einen hydrodynamischen Retarder als auch eine dampfgetriebene Expansionsmaschine anzuordnen, siehe beispielsweise die Patentschriften US 5 121 607, US 5 241 817 und US 5 195 881. Gemäß diesen Dokumenten ist in einem Getriebe sowohl ein hydrodynamischer Retarder angeordnet, um das Fahrzeug hydrodynamisch abzubremsen, als auch eine dampfgetriebene Expansionsmaschine, auch Expander genannt, um das Fahrzeug anzutreiben. Die Expansionsmaschine kann als zusätzliche Antriebsquelle zu einem Verbrennungsmotor vorgesehen sein, jedoch wird auch vorgeschlagen, das Fahrzeug ausschließlich mittels einem aufgeladenen Schraubenexpander anzutreiben, in welchem heiße Brenngase expandiert werden. Ferner wird vorgeschlagen, den Expander auch als Bremse für das Fahrzeug zu verwenden.

Obwohl gemäß den genannten Schriften somit bereits verschiedene Aggregate in einem Antriebsstrang genutzt werden, um das Fahrzeug möglichst energieeffizient anzutreiben, verbleibt aufgrund der zunehmenden Anforderungen an die Energieeffizienz ein Raum für Verbesserungen. Insbesondere werden Möglichkeiten gesucht, die im Antriebsstrang, insbesondere eines Kraftfahrzeugs entstehende Wärme besser auszunutzen.

JP 59 221409 A beschreibt einen Antriebsstrang mit den im Oberbegriff von Anspruch 1 zusammengefassten Merkmalen. Zum weiteren Stand der Technik wird auf die folgenden Dokumente verwiesen:
JP 06 088523 A
JP 57 206709 A
US 5,176,000 A
DE 197 16 299 C1
JP 60 139 538
DE 2 203 319

Der vorliegenden Erfindung liegt die Aufgabe zugrunde, einen Antriebsstrang darzustellen, der hinsichtlich der Wärmeausnutzung gegenüber dem Stand der Technik verbessert ist. Zugleich soll die Herstellung, die Wartung und der Unterhalt eines solchen Antriebsstranges möglichst kostengünstig sein, und komplexe Konstruktionen sollen weitgehend vermieden werden.

Die erfindungsgemäße Aufgabe wird durch einen Antriebsstrang gemäß den unabhängigen Anspruch gelöst. In den abhängigen Ansprüchen sind besonders vorteilhafte und zweckmäßige Ausgestaltungen der Erfindung angegeben.

Gemäß einer ersten erfindungsgemäßen Ausführungsform weist der Antriebsstrang, der insbesondere als Fahrzeugantriebsstrang ausgebildet ist, eine Antriebsmaschine zum Einspeisen von Antriebsleistung in den Antriebsstrang auf. Die Antriebsmaschine kann beispielsweise ein Verbrennungsmotor sein, insbesondere ein Dieselmotor oder eine sonstige Kolbenmaschine. Jedoch kommen auch andere Antriebsmaschinen in Betracht, beispielsweise elektrisch oder elektrodynamisch arbeitende Maschinen, Schraubenmaschinen, beispielsweise ein Schraubenexpander, oder Turbinen, insbesondere eine Gasturbine. Auch ein Brennstoffzellenantrieb oder hier nicht genannte Antriebsmaschinen sind möglich.

Der Antriebsstrang weist einen Kühlkreislauf auf, der in der Regel als geschlossener Kreislauf mit einem Vorratsbehälter ausgeführt ist, wobei in dem Kühlkreislauf ein Kühlmedium umgewälzt wird, um die Antriebsmaschine zu kühlen. Alternativ oder zusätzlich können neben der Antriebsmaschine auch eines oder mehrere weitere Aggregate, insbesondere Nebenaggregate, die zum Betrieb der Antriebsmaschine, des Antriebsstranges oder des Fahrzeugs vorgesehen sind, mittels des Kühlkreislaufes gekühlt werden.

Im Antriebsstrang ist ferner eine Expansionsmaschine angeordnet. Die Expansionsmaschine arbeitet mit einem Fluid oder mit Dampf als Arbeitsmedium. Durch eine Expansion dieses Arbeitsmediums in der Expansionsmaschine wird mechanische Energie erzeugt, die als zusätzliche Antriebsleistung in den Antriebsstrang eingespeist wird oder mittels welcher ein anderes Aggregat oder Nebenaggregat, beispielsweise ein elektrischer Generator, eine Pumpe oder dergleichen angetrieben wird. Beispielsweise kommt hierfür eine Ölpumpe, eine Kraftstoffpumpe oder eine Wasser- beziehungsweise Kühlmediumpumpe in Betracht.

Um den Bauraum und die Kosten eines zusätzlichen Wärmetauschers zu vermeiden und um die Energiebilanz zu optimieren, ist das Kühlmedium des Kühlkreislaufes zugleich das Arbeitsmedium der Expansionsmaschine. Somit strömt das Kühlmedium des Kühlkreislaufes in den Expansionsraum der Expansionsmaschine und expandiert dort unter Abgabe mechanischer Arbeit beziehungsweise Leistung.

Im Kühlkreislauf kann, wie bei Kraftfahrzeugen im Motorkühlkreislauf bekannt, ein Luft-Kühlmedium-Wärmetauscher vorgesehen sein, mittels welchem Wärme aus dem Kühlmedium abgeleitet wird. Um die Wärmeübertragung an die Umgebung zu vergrößern, ist beispielsweise ein Ventilator vorgesehen, der eine erzwungene Strömung von Umgebungsluft über die Wärmetauscherflächen bewirkt. Dieser Wärmetauscher, der in der Regel in Strömungsrichtung hinter der Expansionsmaschine und vor einer Kühlmediumpumpe vorgesehen ist, kann entweder als Kondensator wirken, um bei einer dampfgetriebenen Expansionsmaschine das Arbeitsmedium teilweise oder vollständig zu kondensieren, oder in Strömungsrichtung zwischen der Expansionsmaschine und dem Luft-Kühlmedium-Wärmetauscher ist ein zusätzlicher Kondensator vorgesehen, in welchem das Arbeitsmedium der Expansionsmaschine teilweise oder vollständig kondensiert wird. Insbesondere ist somit ein einziger Wärmetauscher im Kühlkreislauf vorgesehen, mittels welchem Arbeitsmediumwärme beziehungsweise Kühlmediumwärme an die Umgebung abgeführt wird, oder es sind ausschließlich zwei Wärmetauscher im Kühlkreislauf vorgesehen, von denen wenigstens einer als Kondensator arbeitet, um Wärme aus dem Kühlmedium beziehungsweise Arbeitsmedium an die Umgebung abzuleiten. Selbstverständlich ist es gemäß einer alternativen Ausführungsform auch möglich, drei oder mehr Wärmetauscher vorzusehen.

Im Kühlkreislauf ist zusätzlich ein hydrodynamischer Retarder vorgesehen, der mittels dem Kühlmedium direkt gekühlt wird, das heißt, das Kühlmedium ist zugleich das Arbeitsmedium des Retarders, oder welcher indirekt mittels des Kühlmediums gekühlt wird, das heißt, das Arbeitsmedium des Retarders ist getrennt vom Kühlmedium des Kühlkreislaufes, wobei der Wärmeübergang in der Regel in einem Flüssigkeits-Flüssigkeits-Wärmetauscher stattfindet, der insbesondere am Retarder oder im Bereich des Retarders montiert ist. Bei einer solchen Ausführungsform mit einem im Kühlkreislauf direkt oder mittelbar eingebundenen Retarder ist die Expansionsmaschine vorteilhaft in Strömungsrichtung hinter dem Retarder vorgesehen, so dass die im Retarder entstehende Wärme zum Aufheizen des Arbeitsmediums der Expansionsmaschine beiträgt, bevor dieses in der Expansionsmaschine expandiert wird.

Ein solcher hydrodynamischer Retarder weist beispielsweise einen stets umlaufenden oder über eine Trennkupplung wahlweise in Umlauf versetzbaren Rotor auf, der einem Stator oder einem in Gegenrichtung umlaufenden Rotor gegenübersteht und mit diesem einen Arbeitsraum, insbesondere torusförmigen Arbeitsraum ausbildet, in dem ein hydrodynamischer Kreislauf des Arbeitsmediums zur Drehmoment- beziehungsweise Drehleistungsübertragung vom Rotor auf den Stator beziehungsweise den Gegenlaufrotor ausgebildet wird.

Um eine ausreichende Verdampfung und/oder eine Überhitzung des den Retarder verlassenden Arbeitsmediums zu gewährleisten, kann in Strömungsrichtung hinter dem Retarder und vor der Expansionsmaschine ein Dampferzeuger und/oder ein Wärmetauscher beziehungsweise eine Vielzahl von Wärmetauschern vorgesehen sein, der/die vorteilhaft mit im Antriebsstrang anfallender Wärme und/oder mittels durch einen zusätzlichen Brenner erzeugter Wärme beaufschlagt wird/werden, um den notwendigen Energieeintrag in das Arbeitsmedium zu bewirken. Beispielsweise kann die Abgaswärme der im Antriebsstrang vorgesehenen Antriebsmaschine zur Dampferzeugung beziehungsweise Vorwärmung des Arbeitsmediums der Expansionsmaschine verwendet werden.

Gemäß einer zweiten erfindungsgemäßen Ausführungsform ist in einem Antriebsstrang, insbesondere Fahrzeugantriebsstrang, welcher wiederum eine Antriebsmaschine, beispielsweise einen Verbrennungsmotor, insbesondere Dieselmotor oder sonstiger Kolbenmotor oder auch in Form anderer Antriebsmaschinen, aufweisen kann, um Antriebsleistung in den Antriebsstrang einzuspeisen, ein hydrodynamischer Retarder vorgesehen, der in einer ständigen Triebverbindung mit dem Antriebsstrang steht oder wahlweise in eine Triebverbindung mit dem Antriebsstrang schaltbar ist, um ein Bremsmoment auf den Antriebsstrang auszuüben. Der Retarder ist wie bekannt und/oder wie zuvor dargestellt ausgeführt und weist einen Arbeitsraum auf, der ständig mit einem Arbeitsmedium befüllt ist oder in den wahlweise ein Arbeitsmedium eingebracht werden kann, um das gewünschte Bremsmoment hydrodynamisch zu erzeugen.

Ferner ist wiederum eine mit Fluid oder Dampf als Arbeitsmedium angetriebene Expansionsmaschine vorgesehen, mittels welcher Antriebsleistung in den Antriebsstrang einspeisbar ist. Alternativ oder zusätzlich kann die Antriebsleistung der Expansionsmaschine dazu genutzt werden, einen elektrischen Generator oder ein sonstiges Aggregat und/oder Nebenaggregat anzutreiben.

Das Arbeitsmedium des Retarders ist zugleich das Arbeitsmedium der Expansionsmaschine, so dass die im Retarderbetrieb anfallende Wärme, die in das Arbeitsmedium des Retarders eingetragen wird, in der Expansionsmaschine zur Expansion und Erzeugung mechanischer Arbeit beziehungsweise Leistung genutzt werden kann.

In dem gemeinsamen Arbeitsmediumkreislauf des Retarders und der Expansionsmaschine, der vorteilhaft als geschlossener Kreislauf mit einem Vorratsbehälter für das Arbeitsmedium ausgeführt ist, kann ein Kondensator vorgesehen sein, um das aus der Expansionsmaschine strömende Arbeitsmedium teilweise oder vollständig zu kondensieren. Ferner kann in diesem Kreislauf eine Speisepumpe, insbesondere Turbopumpe oder Verdrängungspumpe, vorgesehen sein, um einen Arbeitsmediumkreislauf aufrechtzuerhalten. Alternativ ist es jedoch auch möglich, den Retarder zugleich als Speisepumpe auszuführen, welcher eine Pumpwirkung auf das Arbeitsmedium auswirkt, um dieses in dem Arbeitsmediumkreislauf umzupumpen. Der Retarder kann dann die einzige Speisepumpe sein oder zusätzlich zu einer sonstigen Pumpe, die eine Pumpwirkung auf das Arbeitsmedium ausübt, im Kreislauf vorgesehen sein.

Ein Arbeitsmedium, das in den erfindungsgemäßen Ausführungsformen zum Einsatz gelangen kann, ist beispielsweise Wasser oder ein Wassergemisch. Insbesondere kommt auch eine ionische Flüssigkeit als Arbeitsmedium beziehungsweise Bestandteil des Arbeitsmediums in Betracht. Andere Arbeitsmedien, beispielsweise Öl oder ein Ölgemisch, sind denkbar, wobei in der Regel jedoch ein verdampfungsfähiges Arbeitsmedium vorgesehen ist, um die Expansionsmaschine als dampfgetriebene Expansionsmaschine auszuführen.

Im Arbeitsmediumkreislauf beziehungsweise Kühlmediumkreislauf kann ein Bypass zu der Expansionsmaschine und/oder zu dem Retarder vorgesehen sein, mittels welchem das Arbeitsmedium teilweise oder vollständig an der Expansionsmaschine und/oder dem Retarder vorbei geleitet werden kann. Bei einer Reihenschaltung der Expansionsmaschine und des Retarders kann auch ein gemeinsamer Bypass vorgesehen sein, mit welchem das Arbeitsmedium zugleich an der Expansionsmaschine und dem Retarder vorbei geleitet wird. Selbstverständlich ist es auch möglich, Retarder und Expansionsmaschine parallel zueinander im Arbeitsmediumkreislauf beziehungsweise Kühlkreislauf anzuordnen, und insbesondere einen weiteren parallelen Zweig zu dem Retarder und zu der Expansionsmaschine als Bypass vorzusehen.

Die Aufteilung der Arbeitsmediumströmung auf den Expander und/oder den Retarder und den Bypass kann "automatisch" durch sich einstellende Druckverhältnisse im Arbeitsmediumkreislauf oder gezwungen erfolgen, letzteres durch Vorsehen entsprechender Regelventile und/oder Schaltventile beziehungsweise Wegeventile. Beispielsweise kann in der arbeitsmediumstromteilenden Verzweigung in Strömungsrichtung vor dem Retarder beziehungsweise der Expansionsmaschine ein Wegeventil vorgesehen sein, das den Arbeitsmediumstrom entweder in den Bypass oder den Retarder beziehungsweise die Expansionsmaschine lenkt oder eine Aufteilung des Arbeitsmediumstromes auf beide Wege vornimmt. Alternativ oder zusätzlich kann auch in der Zweigstelle hinter dem Retarder beziehungsweise der Expansionsmaschine, in welcher die Arbeitsmediumströme aus dem Bypass und dem Retarder beziehungsweise der Expansionsmaschine wieder vereint werden, ein entsprechendes Wegeventil vorgesehen sein. Alternativ oder zusätzlich können im Bypass oder parallel hierzu in Reihe zu dem Retarder beziehungsweise der Expansionsmaschine ein oder mehrere Regelventile oder regelbare Drosseln vorgesehen sein, um eine gezwungene Arbeitsmediumstromaufteilung auf den Bypass und den Retarder beziehungsweise die Expansionsmaschine vorzusehen.

Die Erfindung soll nachfolgend anhand von zwei Ausführungsbeispielen exemplarisch beschrieben werden.

Es zeigen:
- Figur 1: eine erste erfindungsgemäße Ausführungsform mit einer Expansionsmaschine und einem Retarder, deren Arbeitsmedium zugleich das Kühlmedium des Kühlkreislaufes ist;
- Figur 2: eine zweite Ausführungsform, bei welcher ein vom Kühlkreislauf getrennter Arbeitsmediumkreislauf vorgesehen ist, und das Arbeitsmedium eines Retarders zugleich das Arbeitsmedium der Expansionsmaschine ist.

Die in den beiden Figuren dargestellten Ausführungsformen betreffen beispielsweise Antriebsstränge eines Kraftfahrzeugs, worunter jegliches mit einer Antriebsmaschine antreibbares Fahrzeug zu verstehen ist, beispielsweise ein Personenkraftwagen, ein Nutzkraftfahrzeug, ein Schienenfahrzeug, ein Schiff und dergleichen. Prinzipiell ist die Erfindung auch bei Flugzeugen anwendbar.

In den Figuren erkennt man eine Antriebsmaschine 1, die als Verbrennungskraftmaschine, beispielsweise als Dieselmotor ausgeführt ist. Die Antriebsmaschine 1 wird mittels eines Kühlkreislaufes 2 gekühlt. Das Kühlmedium im Kühlkreislauf wird mittels einer Pumpe 12 umgewälzt. Das Kühlmedium ist in der Regel Wasser oder ein Wassergemisch.

Wärme, die in das Kühlmedium eingetragen wird, beispielsweise durch die Antriebsmaschine 1, wird über einen Luft-Kühlmedium-Wärmetauscher 8 an die Umgebung abgeführt. Zum Luft-Kühlmedium-Wärmetauscher 8 ist ein Bypass 13 vorgesehen, der über ein Thermostatventil 14 in Abhängigkeit der Kühlmediumtemperatur an der Stelle des Thermostatventils 14 geschaltet wird, um einen mehr oder minder großen Anteil des Kühlmediumstromes durch den Luft-Kühlmedium-Wärmetauscher 8 und/oder den Bypass 13 zu leiten.

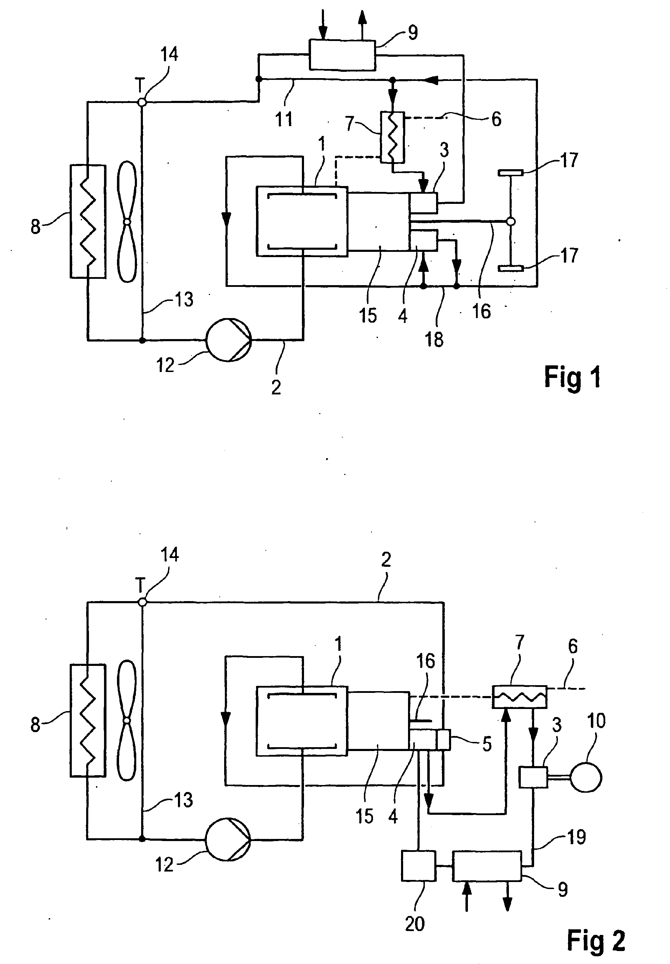

An der Antriebsmaschine 1 ist ein Getriebe 15 angeschlossen, um die Drehzahl beziehungsweise das Drehmoment der Antriebsmaschine 1 mehr oder minder zu wandeln und über eine Getriebeabtriebswelle 16 den Antriebsrädern 17 zuzuführen. Der Motor 1 ist auf der Primärseite des Getriebes 15 angeordnet, die Abtriebswelle 16 auf der Sekundärseite. Auf der Sekundärseite des Getriebes 15 sind gemäß der Figur 1 ferner ein hydrodynamischer Retarder 4 und eine dampfgetriebene Expansionsmaschine 3 angeordnet, beispielsweise jeweils auf einem Nebenabtrieb beziehungsweise im Falle der Expansionsmaschine 3 besser als Nebenantrieb zu bezeichnen. Sowohl der Retarder 4 als auch die Expansionsmaschine 3 werden permanent oder wahlweise, je nach Ausführungsform, vom Kühlmedium als Arbeitsmedium durchströmt. Hinsichtlich der Arbeitsmediumströmung parallel zur Expansionsmaschine 3 ist ein Bypass 11 vorgesehen. Entsprechend ist zu dem Retarder 4 ein Bypass 18 vorgesehen. Obwohl dies nicht dargestellt ist, kann die Strömung durch entsprechende Ventile und/oder Drosseln zwischen den Bypässen 11, 18 und der Expansionsmaschine 3 beziehungsweise dem Retarder 4 wahlweise geschaltet werden.

Im Kühlkreislauf 2 ist in Strömungsrichtung des Kühlmediums vor der Expansionsmaschine 3 ein Abgaswärmetauscher 7 vorgesehen, der im Abgasstrom 6 der Antriebsmaschine 1 angeordnet ist und mittels welchem Wärme aus dem Abgasstrom 6 in das Kühlmedium des Kühlkreislaufes, das zugleich Arbeitsmedium der Expansionsmaschine 3 ist, eingetragen wird. In Strömungsrichtung des Kühlmediums beziehungsweise des Arbeitsmediums hinter der Expansionsmaschine 3 ist im Kühlkreislauf 2 ein Kondensator 9 vorgesehen, um das Arbeitsmedium der Expansionsmaschine 3 zu kondensieren, bevor dieses, in der Regel in vollständig flüssiger Form, dem Luft-Kühlmedium-Wärmetauscher 8 zugeleitet wird.

Vorteilhaft sind alle wärmeerzeugende Aggregate, die mittels des Kühlkreislaufes 2 gekühlt werden, beziehungsweise deren Wärmetauscher bei einem eigenen Arbeitsmediumkreislauf der Aggregate in Strömungsrichtung vor der Expansionsmaschine 3 angeordnet, um deren Wärme zur Expansion und damit zur Erzeugung mechanischer Energie nutzen zu können. Somit ist die Expansionsmaschine 3 abgesehen von dem Kondensator 9, auf den gemäß einer Ausführungsform jedoch verzichtet werden kann, das letzte Aggregat, in dem ein gezielter Wärmeaustausch stattfindet, vor dem Luft-Kühlmedium-Wärmetauscher 8.

Die Ausführungsform gemäß der Figur 2 stimmt in vielen Punkten mit jener der Figur 1 überein, wobei die sich entsprechenden Elemente mit denselben Bezugszeichen gekennzeichnet sind. Abweichend ist jedoch ein vom Kühlkreislauf 2 getrennt vorgesehener Arbeitsmediumkreislauf 19 vorgesehen, welcher das Arbeitsmedium des Retarders 4 und der Expansionsmaschine 3 führt.

Der Retarder 4 ist wiederum als Sekundärretarder ausgeführt. Selbstverständlich kommt jedoch bei sämtlichen erfindungsgemäßen Ausführungsformen mit einem Retarder 4 auch die Ausführung des Retarders 4 als Primärretarder, das heißt angeschlossen auf der Primärseite des Getriebes 15 in Betracht. Während bei einem Sekundärretarder dessen Rotor in Abhängigkeit der Fahrgeschwindigkeit umläuft, läuft bei einem Primärretarder der Rotor in Abhängigkeit der Drehzahl der Antriebsmaschine 1 um.

Die Expansionsmaschine 3 gemäß der Figur 2 dient nicht dem Vortrieb des Fahrzeugs, sondern dem Antrieb eines Nebenaggregats, vorliegend eines elektrischen Generators 10. Selbstverständlich kommen andere Nebenaggregate in Betracht. Auch ist es möglich, den durch den Generator 10 erzeugten Strom wiederum zum Antrieb des Fahrzeugs zu nutzen. Auch bei der Ausführungsform gemäß der Figur 1 kommt eine entsprechende Verwendung der mechanischen Antriebsleistung der Expansionsmaschine 3 in Betracht.

Im Arbeitsmediumkreislauf 19 ist wiederum ein Kondensator 9 in Strömungsrichtung hinter der Expansionsmaschine 3 und ein Abgaswärmetauscher 7 in Strömungsrichtung vor der Expansionsmaschine 3 vorgesehen, mit demselben Ziel wie in der Figur 1. Ferner ist ein Vorratsbehälter 20 für Arbeitsmedium in Strömungsrichtung hinter dem Kondensator 9 in den Arbeitsmediumkreislauf 19 eingebracht.

Bei der gezeigten Ausführungsform ist der Arbeitsmediumkreislauf 19 frei von einer auf das Arbeitsmedium eine Pumpwirkung ausübenden Pumpe. Zum Umwälzen des Arbeitsmediums im Arbeitsmediumkreislauf 19 dient die Pumpwirkung des Retarders 4. Selbstverständlich wäre es möglich, eine zusätzliche Pumpe oder eine Vielzahl von zusätzlichen Pumpen im Arbeitsmediumkreislauf 19 vorzusehen.

Obwohl dies nicht dargestellt ist, können auch im Arbeitsmediumkreislauf 19 Bypässe und/oder Ventile vorgesehen sein, um die Arbeitsmediumströmung am Retarder 4 und/oder der Expansionsmaschine 3 vorbeizuleiten.

Der Kühlmediumkreislauf 2 und der Arbeitsmediumkreislauf 19 stehen über einen Flüssigkeits-Flüssigkeits-Wärmetauscher 5 in einer wärmeübertragenden Verbindung miteinander. Somit ist es entweder möglich, Wärme aus dem Arbeitsmediumkreislauf 19 in den Kühlkreislauf 2 abzuleiten, beispielsweise bevor das Arbeitsmedium in den Retarder 4 eintritt, um eine unzulässige Erwärmung des Retarders 4 zu vermeiden, oder aus dem Kühlkreislauf 2 Wärme in den Arbeitsmediumkreislauf 19 zu übertragen, beispielsweise in Strömungsrichtung hinter dem Retarder 4 und vor der Expansionsmaschine 3, um die übertragene Wärme in der Expansionsmaschine 3 nutzen zu können beziehungsweise das Arbeitsmedium vorzuheizen, bevor es in den Abgaswärmetauscher 7 eingeleitet wird.

Sowohl bei der Ausführungsform gemäß der Figur 1 als auch bei der Ausführungsform gemäß der Figur 2 könnte zusätzlich ein Dampferzeuger in Strömungsrichtung vor der Expansionsmaschine 3 vorgesehen sein, um das Arbeitsmedium der Expansionsmaschine 3 zu verdampfen.

### Bezugszeichenliste

- 1: Antriebsmaschine
- 2: Kühlkreislauf
- 3: Expansionsmaschine
- 4: hydrodynamischer Retarder
- 5: Flüssigkeits-Flüssigkeits-Wärmetauscher
- 6: Abgasstrom
- 7: Abgaswärmetauscher
- 8: Luft-Kühlmedium-Wärmetauscher
- 9: Kondensator
- 10: elektrischer Generator
- 11: Bypass
- 12: Pumpe
- 13: Bypass
- 14: Thermostatventil
- 15: Getriebe
- 16: Getriebeabtriebswelle
- 17: Antriebsräder
- 18: Bypass
- 19: Arbeitsmediumkreislauf
- 20: Vorratsbehälter

## Patentansprüche

1. Antriebsstrang, insbesondere Fahrzeugantriebsstrang,
1.1 mit einem hydrodynamischen Retarder (4), der in einer Triebverbindung mit dem Antriebsstrang steht oder in eine solche schaltbar ist und einen Arbeitsraum aufweist, der mit einem Arbeitsmedium befüllt oder befüllbar ist, um hydrodynamisch ein Bremsmoment zu erzeugen;
1.2 mit einer mit Fluid oder Dampf als Arbeitsmedium angetriebenen Expansionsmaschine (3), mittels welcher Antriebsleistung in den Antriebsstrang einspeisbar ist oder die einen elektrischen Generator (10) oder sonstiges Aggregat antreibt; wobei
1.3 das Arbeitsmedium des Retarders (4) zugleich das Arbeitsmedium der Expansionsmaschine (3) ist; **dadurch gekennzeichnet, dass** das Arbeitsmedium des Retarders (4) und der Expansionsmaschine (3) in einem geschlossenen Kreislauf mit einem Kondensator (9) zum teilweisen oder vollständigen Kondensieren des Arbeitsmediums geführt wird, und in dem Kreislauf eine Speisepumpe vorgesehen ist oder der Retarder (4) zugleich als Speisepumpe wirkt.

2. Antriebsstrang gemäß einem der Ansprüche 1 oder 2, **dadurch gekennzeichnet, dass** der Retarder (4) in einem Kühlkreislauf (2), in welchem ein Kühlmedium umgewälzt wird, um eine Antriebsmaschine (1) zum Einspeisen von Antriebsleistung in den Antriebsstrang oder einen elektrischen Generator (10) oder sonstiges Aggregat zu kühlen, angeordnet ist, und das Arbeitsmedium des hydrodynamischen Retarders (4) zugleich das Kühlmedium ist.

3. Antriebsstrang gemäß einem der Ansprüche 1 oder 2, **dadurch gekennzeichnet, dass** der Retarder (4) mittels eines Kühlkreislaufes (2) gekühlt wird, in welchem ein Kühlmedium umgewälzt wird, um eine Antriebsmaschine (1), insbesondere einen Verbrennungsmotor zum Einspeisen von Antriebsleistung in den Antriebsstrang zu kühlen, wobei insbesondere ein Flüssigkeits-Flüssigkeits-Wärmetauscher (5) vorgesehen ist, in welchem Wärme aus dem Arbeitsmedium des Retarders (4) in das Kühlmedium übertragen wird.

4. Antriebsstrang gemäß einem der Ansprüche 1 bis 4, **dadurch gekennzeichnet, dass** eine Antriebsmaschine (1) in Form eines Verbrennungsmotors zum Einspeisen von Antriebsleistung in den Antriebsstrang vorgesehenen ist, die einen heißen Abgasstrom (6) erzeugt, und der Abgasstrom (6) durch einen Abgaswärmetauscher (7) geleitet wird, um Wärme aus dem Abgasstrom (6) in Strömungsrichtung vor der Expansionsmaschine (3) dem Arbeitsmedium der Expansionsmaschine (3) zuzuführen.

5. Antriebsstrang gemäß einem der Ansprüche 1 bis 5, **dadurch gekennzeichnet, dass** in dem Kreislauf, in welchem die Expansionsmaschine (39 vorgesehen ist, eine einzige Pumpe (12), die eine Pumpwirkung auf das Arbeitsmedium der Expansionsmaschine (3) Insbesondere zusammen mit dem Retarder (4) ausübt, vorgesehen ist.

6. Antriebsstrang gemäß einem der Ansprüche 1 bis 6, **dadurch gekennzeichnet, dass** ein Bypass (11) zu der Expansionsmaschine (3) vorgesehen ist, über welchen das Arbeitsmedium der Expansionsmaschine (3) durch ein Schaltventil gezwungen oder selbsttätig durch die vorherrschenden Druckverhältnisse an der Expansionsmaschine (3) vorbeileitbar ist.

7. Antriebsstrang gemäß einem der Ansprüche 1 bis 7, **dadurch gekennzeichnet, dass** der hydrodynamische Retarder (4) und die Expansionsmaschine (3) In einem Kühlkreislauf (2) zum Kühlen einer Antriebsmaschine (1) insbesondere in Form eines Verbrennungsmotors, eines elektrischen Generators (10) oder eines sonstigen Aggregats angeordnet sind, und im Kühlkreislauf (2) ein Luft-Kühlmedlum-Wärmetauscher (8) vorgesehen ist, mittels welchem Wärme aus dem Kühlmedium abgeleitet wird, und in Strömungsrichtung vor dem Luft-Kühlmedium-Wärmetauscher (8), insbesondere unmittelbar vor dem Luft-Kühlmedium-Wärmetauscher (8), und hinter der Expansionsmaschine (3) insbesondere ein Kondensator (9) im Kühlkreislauf 82) angeordnet ist, in welchem das Arbeitsmedium der Expansionsmaschine (3) teilweise oder vollständig kondensiert wird.

## Claims

1. A drive train, especially a vehicle drive train,
1.1. with a hydrodynamic retarder (4) which is in a drive connection with the drive train or can be switched into such a connection, and comprises a working chamber which is filled with working medium or can be filled with said medium in order to generate a braking torque in a hydrodynamic way;
1.2. with an expansion machine (3) which is driven by fluid or steam as a working medium and by means of which drive power can be supplied to the drive train or which drives an electric generator (10) or another unit,
1.3. with the working medium of the retarder (4) simultaneously being the working medium of the expansion machine (3);
**characterized in that**
the working medium of the retarder (4) and the expansion machine (3) is guided in a closed circuit with a condenser (9) for partial or full condensing of the working medium, and a feed pump is provided in the circuit or the retarder (4) acts simultaneously as a feed pump.

2. A drive train according to one of the claims 1 or 2, **characterized in that** the retarder (4) is arranged in a cooling circuit (2) in which a cooling medium is revolved in order to cool an engine (1) for supplying drive power to the drive train or an electric generator (10) or any other unit, and the working medium of the hydrodynamic retarder (4) is simultaneously the cooling medium.

3. A drive train according to one of the claims 1 or 2, **characterized in that** the retarder (4) is cooled by means of a cooling circuit (2) in which a cooling medium is revolved in order to cool an engine (1), especially an internal combustion engine for supplying drive power to the drive train, with a fluid/fluid heat exchanger (5) being especially provided in which heat is transmitted from the working medium of the retarder (4) to the cooling medium.

4. A drive train according to one of the claims 1 to 4, **characterized in that** an engine (1) in form of an internal combustion engine is provided for supplying drive power to the driver train, which engine generates a hot exhaust flow (6), and the exhaust flow (6) is guided through an exhaust heat exchanger (7) in order to supply heat from the exhaust flow (6) to the working medium of the expansion machine (3) in the direction of flow before the expansion machine (3).

5. A drive train according to one of the claims 1 to 5, **characterized in that** a single pump (12) which exerts a pumping action on the working medium of the expansion machine (3), especially together with a retarder (4), is provided in the circuit in which the expansion machine (3) is provided.

6. A drive train according to one of the claims 1 to 6, **characterized in that** a bypass (11) to the expansion machine (3) is provided, through which the working medium of the expansion machine (3) is forced through a switching valve or can be guided past the expansion machine (3) automatically by the prevailing pressure conditions.

7. A drive train according to one of the claims 1 to 7, **characterized in that** the hydrodynamic retarder (4) and the expansion machine (3) are arranged in a cooling circuit (2) for cooling an engine (1), especially in form of an internal combustion engine, an electric generator (10) or any other unit, and an air/cooling medium heat exchanger (8) is provided by means of which heat is carried off from the cooling medium, and a condenser (9) is arranged in the cooling circuit (2) in the direction of flow before the air/cooling medium heat exchanger (8), especially directly before the air/cooling medium heat exchanger (8), and after the expansion machine (3), in which cooling circuit the working medium of the expansion machine (3) is condensed in part or in full.

## Revendications

1. Train de transmission, en particulier train de transmission de véhicule,
1.1 avec un retardateur hydrodynamique (4) qui se trouve en liaison motrice avec le train de transmission ou peut être embrayé dans celui-ci et qui présente un espace de travail qui est rempli ou peut être rempli d'un fluide de travail pour créer un couple de freinage de manière hydrodynamique ;
1.2 avec une machine à expansion (3) entraînée avec un fluide ou de la vapeur servant de fluide de travail, au moyen de laquelle la puissance motrice peut être amenée au train de transmission ou qui entraîne un générateur électrique (10) ou un autre groupe ;
dans lequel
1.3 le fluide de travail du retardateur (4) est en même temps le fluide de travail de la machine à expansion (3) ;
**caractérisé en ce que** le fluide de travail du retardateur (4) et de la machine à expansion (3) est acheminé en circuit fermé avec un condenseur (9) pour la condensation partielle ou totale du fluide de travail et une pompe d'alimentation est prévue dans le circuit, ou bien le retardateur (4) fait en même temps fonction de pompe d'alimentation.

2. Train de transmission selon l'une des revendications 1 ou 2, **caractérisé en ce que** le retardateur (4) est disposé dans un circuit de refroidissement (2) dans lequel un fluide de refroidissement est mis en circulation pour refroidir une machine motrice (1) destinée à amener la puissance motrice au train de transmission ou à un générateur électrique (10) ou un autre groupe, et le fluide de travail du retardateur hydrodynamique (4) est en même temps le fluide de refroidissement.

3. Train de transmission selon l'une des revendications 1 ou 2, **caractérisé en ce que** le retardateur (4) est refroidi au moyen d'un circuit de refroidissement (2) dans lequel un fluide de refroidissement est mis en circulation afin de refroidir une machine motrice (1), en particulier un moteur à combustion interne pour amener la puissance motrice au train de transmission, un échangeur de chaleur liquide-liquide (5) étant en particulier prévu, dans lequel de la chaleur est transférée du fluide de travail du retardateur (4) au fluide de refroidissement.

4. Train de transmission selon l'une des revendications 1 à 4, **caractérisé en ce qu'**il est prévu une machine motrice (1) prenant la forme d'un moteur à combustion interne pour amener la puissance motrice au train de transmission, laquelle produit un flux de gaz d'échappement chaud (6), et le flux de gaz d'échappement (6) est amené à travers un échangeur de chaleur à gaz d'échappement (7) pour amener de la chaleur du flux de gaz d'échappement (6) au fluide de travail de la machine à expansion (3) avant la machine à expansion (3) dans le sens d'écoulement.

5. Train de transmission selon l'une des revendications 1 à 5, **caractérisé en ce qu'**il est prévu dans le circuit dans lequel est prévue la machine à expansion (3) une seule pompe (12) qui produit un effet de pompage sur le fluide de travail de la machine à expansion (3), en particulier avec le retardateur (4).

6. Train de transmission selon l'une des revendications 1 à 6, **caractérisé en ce qu'**il est prévu une dérivation (11) vers la machine à expansion (3), par laquelle le fluide de travail de la machine à expansion (3) peut être amené en contournant la machine à expansion (3) en étant contraint par une vanne de commutation ou de lui-même sous l'effet des conditions de pression.

7. Train de transmission selon l'une des revendications 1 à 7, **caractérisé en ce que** le retardateur hydrodynamique (4) et la machine à expansion (3) sont disposés dans un circuit de refroidissement (2) destiné à refroidir une machine motrice (1) prenant en particulier la forme d'un moteur à combustion interne, d'un générateur électrique (10) ou d'un autre groupe, et il est prévu dans le circuit de refroidissement (2) un échangeur de chaleur air-fluide de refroidissement (8) au moyen duquel de la chaleur est extraite du fluide de refroidissement, et il est prévu dans le circuit de refroidissement (2), en particulier disposé avant l'échangeur de chaleur air-fluide de refroidissement (8) dans le sens d'écoulement, en particulier immédiatement avant l'échangeur de chaleur air-fluide de refroidissement (8), et après la machine à expansion (3), un condenseur (9) dans lequel le fluide de travail de la machine à expansion (3) est partiellement ou complètement condensé.
